# EUROPÄISCHE PATENTANMELDUNG

(11) **EP 2 567 857 A1**
(43) Veröffentlichungstag der Anmeldung: **13.03.2013**
(21) Anmeldenummer: 11180664.2
(22) Anmeldetag: 09.09.2011
(51) Int. Cl.: B60L 11/18, H02M 3/158

(54) **Energieversorgungssystem für ein Elektrofahrzeug**

(71) Anmelder: Siemens Aktiengesellschaft, 80333 München (DE)
(72) Erfinder: Bakran, Mark-Matthias, 91052 Erlangen (DE)

(57) **Zusammenfassung**

Die Erfindung betrifft ein Energieversorgungssystem (2) für einen Elektromotor (4) eines Elektrofahrzeugs, mit einem Spannungswandler (10) sowie mit einem Schaltwerk (8). Mittels des Schaltwerks (8) ist der Spannungswandler (10) in einem ersten Betriebsmodus zur Versorgung des Elektromotors (4) mit elektrischer Energie aus einem Akkumulator (6) als Gleichspannungs-Gleichspannungs-Wandler zwischen den Akkumulator (6) und einem dem Elektromotor (4) vorgeschalteten Zwischenkreis (16) schaltbar. In einem zweiten Betriebsmodus ist der Spannungswandler (10) mittels des Schaltwerks (8) zur Einspeisung von elektrischer Energie aus einem Versorgungsnetz (26,28) in den Akkumulator (6) als Gleichrichter zwischen das Versorgungsnetz (26,28) und den Akkumulator (6) schaltbar.

## Beschreibung

Die Erfindung betrifft ein Energieversorgungssystem für einen Elektromotor eines Elektrofahrzeugs.

Die Weiterentwicklung von Elektrofahrzeugen für den Straßenverkehr als Alternative für Fahrzeuge mit Verbrennungsmotor wird derzeit mit einem hohen Aufwand vorangetrieben. Hierbei werden insbesondere zwei grundlegende Entwicklungsansätze verfolgt. Zum einen wird an einer Verbesserung des Antriebssystems, d.h. des Elektromotors gearbeitet. Zum anderen wird versucht, die Versorgung eines solchen Antriebssystems mit elektrischer Energie durch vorteilhafte Energieversorgungssysteme rationeller und effektiver zu gestalten.

Das Hauptaugenmerk liegt dabei derzeit auf Energieversorgungssystemen, die einen als Energiezwischenspeicher dienenden Akkumulator schaltungstechnisch mit dem Antriebssystem und einem zuschaltbaren Versorgungsnetz verbinden. Für ein solches Energieversorgungssystem existieren typischerweise zwei Betriebsmodi. In einem "Lademodus" wird elektrische Energie aus dem Versorgungsnetz in den Akkumulator eingespeist und dadurch im Akkumulator zwischengespeichert. Diese zwischengespeicherte Energie wird dann in einem "Antriebsmodus" oder "Fahrbetriebsmodus" genutzt, um das Antriebssystem mit elektrischer Energie zu versorgen.

In beiden Betriebsmodi besteht die Notwendigkeit, die elektrische Energie umzuformen. So ist im Lademodus einerseits regelmäßig eine Gleichrichtung des von dem Versorgungsnetz zur Verfügung gestellten Wechselstroms erforderlich, um die elektrische Energie in den Akkumulator einspeisen zu können. In dem Antriebsmodus wird der von dem Akkumulator ausgegebene Gleichstrom häufig zunächst in einen Gleichstrom mit höherer Spannung hochgesetzt um das Antriebssystem mit einer, von der Akkumulatorspannung unabhängigen, konstanten Spannung ansteuern zu können. Dieser hochgesetzte Gleichstrom wird anschließend in einen dem Antriebssystem zugeführten, meist mehrphasigen Wechselstrom umgerichtet.

Das Energieversorgungssystem umfasst in diesem Fall üblicherweise drei verschiedene Stromrichter, nämlich für Lademodus einen Gleichrichter zur Speisung des Akkumulators, sowie für den Antriebsmodus einen Gleichstrom-Gleichstrom-Wandler zur Speisung eines Gleichspannungs-Zwischenkreises aus dem Akkumulator und einen Pulswechselrichter zur Versorgung des Antriebssystems aus dem Gleichspannungs-Zwischenkreis. Ein solches Energieversorgungssystem ist vergleichsweise schwer und voluminös. Zudem ist es mit einem erheblichen Material- und Herstellungsaufwand verbunden und entsprechend teuer.

Hiervon ausgehend liegt der Erfindung die Aufgabe zugrunde, ein Energieversorgungssystem für ein Elektrofahrzeug rationeller zu gestalten, insbesondere vom Aufbau her zu vereinfachen.

Diese Aufgabe wird erfindungsgemäß gelöst durch die Merkmale des Anspruchs 1. Die rückbezogenen Ansprüche beinhalten vorteilhafte und teilweise für sich selbst erfinderische Ausgestaltungen und Weiterbildungen dieser Erfindung.

Das erfindungsgemäße Energieversorgungssystem umfasst einen Spannungswandler und ein Schaltwerk. Das Energieversorgungssystem dient einerseits zur Versorgung des Elektromotors eines Elektrofahrzeugs mit der aus Akkumulator zur Verfügung gestellten elektrischen Energie. Es dient andererseits auch zur Aufladung des Akkumulators mit elektrischer Energie aus einem elektrischen Versorgungsnetz. Entsprechend ist das Energieversorgungssystem in einem ersten Betriebsmodus (Antriebsmodus) und einem zweiten Betriebsmodus (Lademodus) betreibbar. Erfindungsgemäß ist der Spannungswandler durch entsprechende Beschaltung mittels des Schaltwerks in den beiden Betriebsmodi in unterschiedlicher Weise nutzbar. So ist der Spannungswandler in dem Antriebsmodus zur Versorgung des Elektromotors mit elektrischer Energie aus dem Akkumulator als Gleichspannungs-Gleichspannungs-Wandler zwischen den Akkumulator und einen (Gleichspannungs-)Zwischenkreis schaltbar, aus dem dann wiederum der Elektromotor versorgt wird. Der Spannungswandler wird hierbei in zweckmäßiger Ausbildung insbesondere als Hochsetzsteller betrieben, der aus der von dem Akkumulator ausgegebenen Gleichspannung eine hochgesetzte Gleichspannung mit höheren Spannungswert erzeugt und in den Zwischenkreis einspeist. Die hochgesetzte Gleichspannung wird insbesondere auf einen vorgegebenen Spannungswert geregelt, d.h. konstant gehalten. In dem Lademodus ist der Spannungswandler dagegen zur Einspeisung von elektrischer Energie aus dem Versorgungsnetz in den Akkumulator als Gleichrichter zwischen das Versorgungsnetz und den Akkumulator schaltbar.

Durch die Nutzung ein und desselben Spannungswandlers als Ladegleichrichter und Gleichspannungs-Gleichspannungs-Wandler zur Zwischenkreisspeisung wird eine wesentliche Vereinfachung des Energieversorgungssystems erzielt, die sich in einem geringem Gewicht und Bauvolumen für das Energieversorgungssystem, vor allem aber in einem wesentlich verringerten Herstellungsaufwand äußert.

In vorteilhafter Ausbildung wird als Spannungswandler ein mehrphasiger Spannungswandler genutzt. Um den Spannungswandler effizient im Lademodus als Gleichrichter verwenden zu können, ist die Anzahl der Phasen des Spannungswandlers dabei vorzugsweise so gewählt, dass sie mindestens der Phasenanzahl des anzuschließenden Versorgungsnetzes entspricht. In einer zweckmäßigen Weiterbildung ist das Energieversorgungssystem zum wahlweisen und austauschbaren Anschluss an Versorgungsnetze unterschiedlicher Phasenanzahl ausgebildet. In diesem Fall umfasst der Spannungswandler mindestens genauso viele Phasen wie das anschließbare Versorgungsnetz mit der höchsten Phasenanzahl.

In einer vorteilhaften Ausführungsvariante ist das Energieversorgungssystem derart eingerichtet, dass es wahlweise und austauschbar an ein zweiphasiges Versorgungsnetz oder an ein dreiphasiges Versorgungsnetz abschließbar ist. Vorzugsweise weist es eine mit dem Schaltwerk verbundene Steckverbindung auf, mit der wahlweise übliche Anschlusssteckverbinder von zweiphasigen oder dreiphasigen Versorgungsnetzen kontaktierbar sind. Die gleichzeitige Eignung des Energieversorgungssystems zum Anschluss von zweiphasigen und dreiphasigen Versorgungsnetzen ist insbesondere vorteilhaft, um das mit dem Energieversorgungssystem ausgestattet Elektrofahrzeug in unterschiedlichen, zu erwartenden Situationen aufladen zu können. So ist eine Anschlussmöglichkeit an ein dreiphasiges Versorgungsnetz typisch für eine sogenannte Strom-Tankstelle (auch Ladestation genannt), mit deren Hilfe eine gegebene Menge an elektrischer Energie in vergleichsweise kurzer Zeit zu entnehmen ist. Da jedoch Strom-Tankstellen nicht überall verfügbar sind, ist die zusätzliche Anschlussmöglichkeit an zweiphasige Versorgungsnetze, wie sie auch in Privathaushalten üblicherweise zur Verfügung stehen, sinnvoll. Bei Nutzung eines zweiphasigen Versorgungsnetzes bleibt in zweckmäßiger Ausprägung des Schaltwerks eine der drei Anschlussphasen des Schaltwerks ungenutzt.

Vorzugsweise beträgt die Anzahl i der Phasen des Spannungsrichters aber ein ganzzahliges Vielfaches n (mit n = 2,3,...) der (ggf. höchsten) Phasenanzahl der anschließbaren Versorgungsnetze, so dass auf jede Netzphase n Spannungsrichter-Phasen kommen. Bei einem an ein dreiphasiges Versorgungsnetz anschließbaren Energieversorgungssystem gilt also: i = 3·n. Durch den Einsatz mehrerer paralleler Phasen werden die auftretenden Phasenströme in Teilströme geringerer Stromstärke aufgeteilt. Die typischerweise in einem Spannungswandler eingesetzten Drosselspulen erfahren somit eine geringere Strombelastung und können entsprechend kleiner ausgelegt werden.

Im Antriebsmodus werden vorzugsweise alle Phasen des Spannungswandlers durch das Schaltwerk parallel zueinander mit dem Pluspol des Akkumulators verschaltet. Im Lademodus wird dagegen - je nach Anzahl der Spannungswandlerphasen - vorzugsweise jeweils eine Phase oder eine Gruppe von parallelgeschalteten Phasen des Spannungswandlers durch das Schaltwerk mit jeder Phase des Versorgungsnetzes verschaltet, während der Pluspol des Akkumulators durch das Schaltwerk mit dem Pluspol des Zwischenkreises verschaltet wird. Der Minuspol des Akkumulators wird zweckmäßigerweise in beiden Betriebsmodi durch das Schaltwerk fest auf den Minuspol des Zwischenkreises geschaltet.

Zusätzlich zu dem Spannungswandler und dem Schaltwerk umfasst das Energieversorgungssystem zweckmäßigerweise einen - insbesondere gepulst angesteuerten - Wechselrichter, der dem Zwischenkreis und dem Elektromotor zwischengeschaltet ist und die im Zwischenkreis anliegende Gleichspannung in eine - in der Regel mehrphasige Wechselspannung zur Versorgung des Elektromotors umwandelt.

Der Spannungswandler und das Schaltwerk sind vorzugsweise durch eine gemeinsame, zentrale Steuereinheit angesteuert, deren Kernbestandteil in zweckmäßiger Ausbildung durch einen Mikrocontroller mit einem darin implementierten Steuerprogramm gebildet ist. Die zentrale Steuereinheit kann optional darüber hinaus auch zur Ansteuerung des Wechselrichters dienen.

Gegenstand der Erfindung ist ferner ein Verfahren zum Betrieb eines Energieversorgungssystems für einen Elektromotor eines Elektrofahrzeugs, wobei das Energieversorgungssystem einen Spannungswandler umfasst. Der Spannungswandler wird hierbei erfindungsgemäß in einem ersten Betriebsmodus zur Versorgung des Elektromotors mit elektrischer Energie aus einem Akkumulator als Gleichspannungs-Gleichspannungs-Wandler betrieben. In einem zweiten Betriebsmodus wird derselbe Spannungswandler dagegen erfindungsgemäß zur Einspeisung von elektrischer Energie aus einem Versorgungsnetz in den Akkumulator als Gleichrichter betrieben.

Ausführungsbeispiele der Erfindung werden nachfolgend anhand einer schematischen Zeichnung näher erläutert. Darin zeigen:
- FIG 1: in einem Blockschaltbild ein Energieversorgungssystem für einen Elektromotor eines Elektrofahrzeugs, mit einem Spannungswandler und einem Schaltwerk, mittels welchem der Spannungswandler in einem "Antriebsmodus" als Hochsetzsteller zwischen einen Akkumulator und den Elektromotor sowie in einem "Lademodus" als Gleichrichter zwischen den Akkumulator und ein Versorgungsnetz schaltbar ist,
- FIG 2: in einem schematisch vereinfachten Schaltbild das Schaltwerk des Energieversorgungssystems,
- FIG 3: in einem Blockschaltbild das Energieversorgungssystem in der dem Antriebsmodus entsprechenden Verschaltung,
- FIG 4: in Darstellung gemäß FIG 3 das Energieversorgungssystem in der dem Lademodus entsprechenden Beschaltung bei Anschluss an ein 3-poliges Versorgungsnetz, und
- FIG 5: in Darstellung gemäß FIG 3 das Energieversorgungssystem in der dem Lademodus entsprechenden Beschaltung bei Anschluss an ein 2-poliges Versorgungsnetz.
Einander entsprechende Teile sind in allen Figuren mit den gleichen Bezugszeichen versehen.

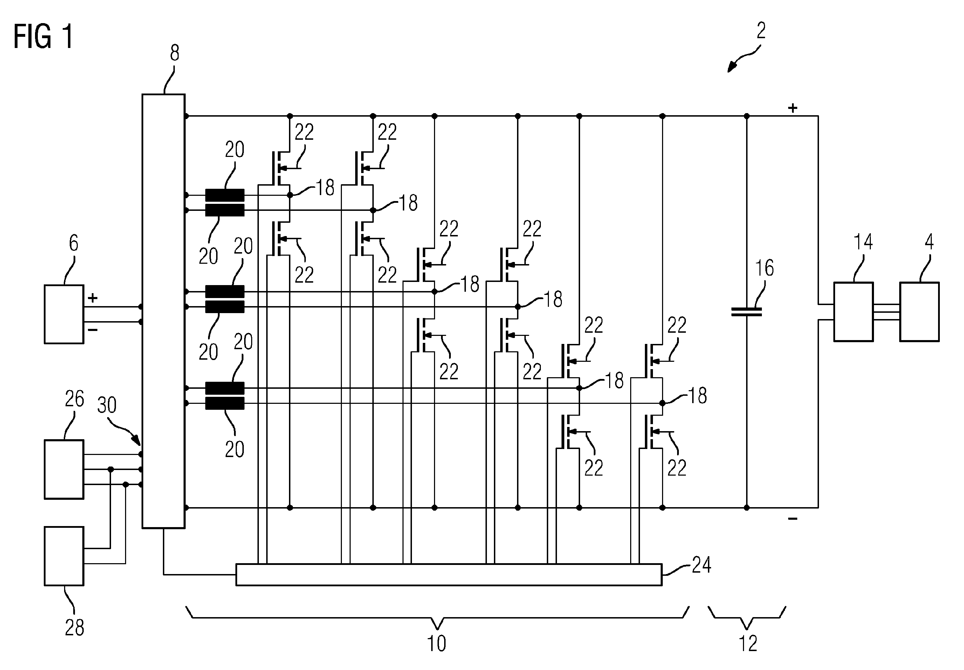

Das in FIG 1 dargestellte Energieversorgungssystem 2 dient zur Energieversorgung eines Elektromotors 4, der das Antriebssystem für ein nicht näher gezeigtes Elektrofahrzeug bildet. Konkret dient das Energieversorgungssystem 2 in einem ersten Betriebsmodus (Antriebsmodus) zur schaltungstechnischen Verbindung des Elektromotors 4 mit einem Akkumulator 6. In einem zweiten Betriebsmodus (Lademodus) dient es ferner zur Speisung des Akkumulators 6 mit einem Ladestrom.

Das Energieversorgungssystem 2 umfasst hierzu ein Schaltwerk 8, einen Spannungswandler 10, einen (Gleichspannungs-) Zwischenkreis 12 sowie einen Wechselrichter 14. Das Schaltwerk 8 ist dem Akkumulator 6 und dem Spannungswandler 10 entsprechend der Darstellung gemäß FIG 1 zwischengeschaltet, wobei es je nach Betriebsmodus eine unterschiedliche Verschaltung des Akkumulators 6 mit dem Spannungswandler 10 realisiert. Dem Spannungswandler 10 nachgeschaltet ist der Zwischenkreis 12, welcher einen (Zwischenkreis-)Kondensator 16 zur Spannungsglättung sowie zur Kurzzeitspeicherung von elektrischer Energie enthält. Parallel zum Kondensator 16 ist der Wechselrichter 14 in den Zwischenkreis 12 geschaltet, an dessen Ausgang schließlich der Elektromotor 4 angeschlossen ist.

Der in FIG 1 dargestellte Spannungswandler 10 umfasst exemplarisch sechs Phasen 18. Die Phasen 18 sind durch parallel zueinander in den Zwischenkreis 12 geschaltete Halbbrücken gebildet. Jede Phase 18 bzw. Halbbrücke umfasst hierbei jeweils zwei ansteuerbare Halbleiterschalter 22 sowie eine (Drossel-)Spule 20, die mit einem Mittelabgriff zwischen beiden Halbleiterschaltern 22 verbunden ist. Ein jeder der Halbleiterschalter 22 ist hier durch einen MOSFET gebildet, der über eine zentrale Steuereinheit 24 unabhängig von den übrigen Halbleiterschaltern 22 ansteuerbar ist.

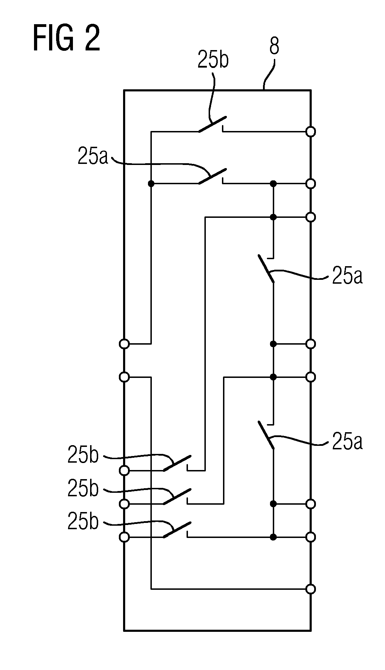

Bei dem Schaltwerk 8 handelt es sich um ein - exemplarisch in FIG 2 näher dargestelltes - elektrisches Weichensystem, bei dem Leiterbahnsegmente mittels ansteuerbarer Schalter 25a und 25b in verschiedener Weise verbindbar sind. Die Schalter 25a und 25b sind in bevorzugter Ausführung durch Halbleiterschalter, zum Beispiel in Form von IGBTs oder MOSFETs gebildet. Grundsätzlich könnten aber auch elektromechanische Relais als Schalter 25a und 25b verwendet werden. Die Schalter 25a und 25b werden (in nicht explizit dargestellter Weise) durch die zentrale Steuereinheit 24 angesteuert, wobei die Schalter 25a einerseits und die Schalter 25b andererseits im Betrieb des Energieversorgungssystems stets in entgegengesetzter Weise betätigt werden.

Als weiterer, jedoch nicht permanent mit dem Schaltwerk 8 verbundener Baustein ist ein Versorgungsnetz 26, 28 vorgesehen, welches gemäß FIG 1 als drei-phasiges Versorgungsnetz 26 oder als zwei-phasiges Versorgungsnetz 28 ausgeführt sein kann und welches mittels einer Steckverbindung 30 bei Bedarf von einem Bediener, insbesondere dem Fahrer des Elektrofahrzeugs, mit dem Schaltwerk 8 versorgungstechnisch verbunden wird.

Mittels des Schaltwerks 8, genauer durch gemeinsames Umschalten der Schalter 25a und 25b, kann das Energieversorgungssystem 2 reversibel zwischen dem Antriebsmodus und dem Lademodus geschaltet werden.

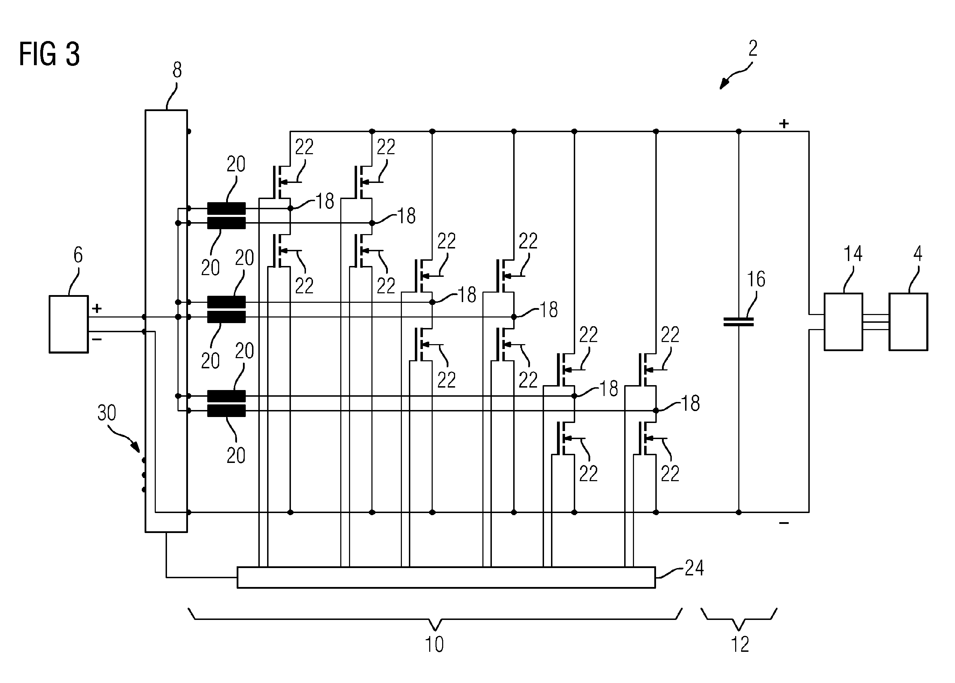

In dem Antriebsmodus ist das Elektrofahrzeug regelmäßig von dem Versorgungsnetz 26, 28 abgekoppelt und wird zur Fortbewegung eingesetzt. Dementsprechend wird dem Akkumulator 6 elektrische Energie entzogen und mittels des Spannungswandlers 10 in den Zwischenkreis 12 eingespeist, aus dem wiederum der Wechselrichter 14 den Elektromotor 4 mit elektrischer Energie versorgt. In dem Antriebsmodus arbeitet der Spannungswandler 10 als Hochsetzsteller, indem er aus der von dem Akkumulator 6 bereitgestellten Gleichspannung eine Gleichspannung mit höherem - auf einen Sollwert geregelten - Spannungsbetrag erzeugt und in den Zwischenkreis 12 einspeist. Die Phasen 18 des Spannungswandlers sind hierbei durch das Schaltwerk 8 - wie in FIG 3 gezeigt - parallel zueinander auf den Pluspol des Akkumulators 6 geschaltet, indem die Schalter 25a geschlossen werden. Durch gleichzeitiges Öffnen der Schalter 25b werden einerseits der Pluspol des Zwischenkreises 12 von dem Akkumulator 6, und andererseits zur Sicherheit die Phasen 18 von dem Anschluss für das Versorgungsnetz 26,28 getrennt. Der Minuspol des Akkumulators 6 ist durch das Schaltwerk 8 fest auf den Minuspol des Zwischenkreises 12 geschaltet.

In seiner Funktion als Hochsetzsteller werden die beiden Halbleiterschalter22 einer jeden Phase 18 in üblicher Weise gegensinnig getaktet angesteuert. Die Parallelschaltung aller sechs Phasen 18 hat im Betrieb des Spannungswandlers 10 als Hochsetzsteller insbesondere den Vorteil, dass die Spulen 20 der einzelnen Phasen 18 von der Baugröße her vergleichsweise klein ausgelegt werden können.

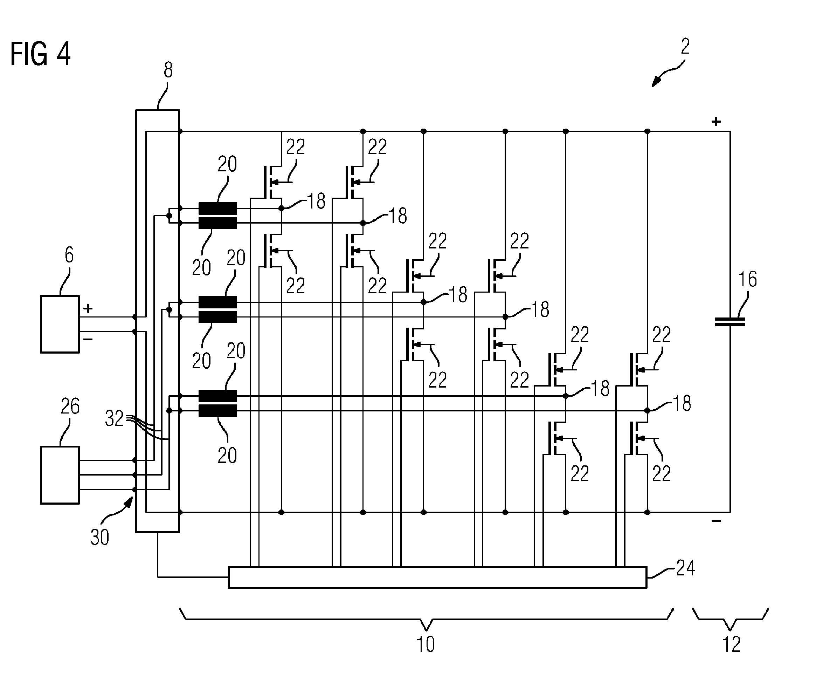

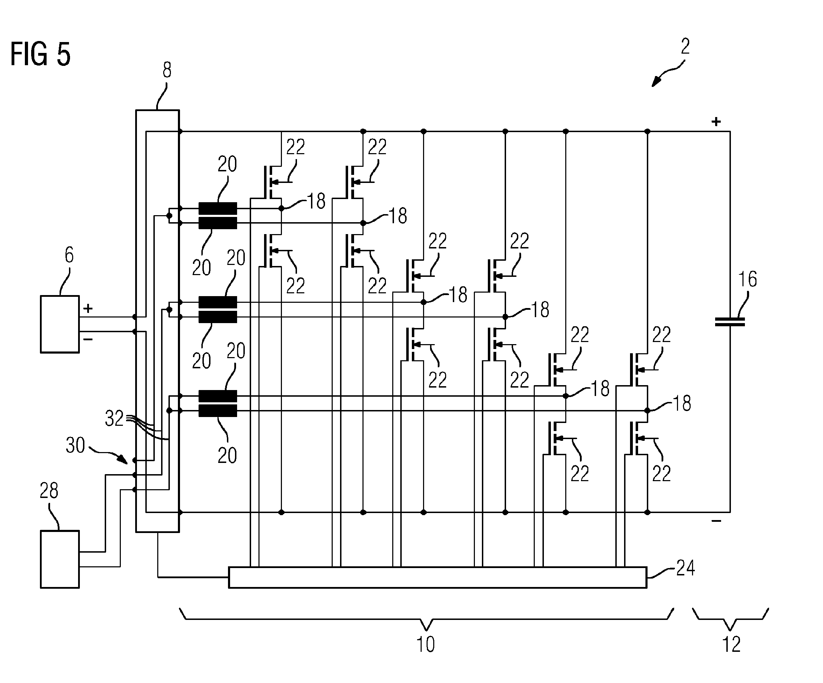

Zum Aufladen des Akkumulators 6 verbindet der Bediener oder Fahrer das Energieversorgungssystem 2 des Elektrofahrzeugs mit Hilfe der Steckverbindung 30 mit dem (zweiphasigen oder dreiphasigen) Versorgungsnetz 26, 28, worauf das Energieversorgungssystem 2 in den Lademodus geschaltet wird. Das Schaltwerk 8 wird durch die zentrale Steuereinheit 24 derart angesteuert, dass gemäß FIG 4 oder FIG 5 jede Phase des Versorgungsnetzes 26 bzw. 28 über eine als Anschlussphase 33 bezeichnete Leitungsstrecke mit jeweils einer Gruppe von zwei Phasen 18 des Stromwandlers 10 verbunden ist. Die Phasengruppen werden hierbei durch Öffnen der Schalter 25a voneinander sowie von dem Pluspol des Akkumulators 6 getrennt und durch Schließen der Schalter 25b auf die jeweils zugeordnete Phase des Versorgungsnetzes 26,28 geschaltet. Gleichzeitig wird beim Schließen der Schalter 25b auch der Pluspol des Akkumulators 6 mit dem Pluspol des Zwischenkreises 12 verbunden. Der Minuspol des Akkumulators 6 ist auch im Ladebetrieb auf den Minuspol des Zwischenkreises 12 geschaltet.

Im Lademodus wird der Spannungswandler 10 als sogenanntes Active-Front-End, d.h. als geregelter Netzgleichrichter betrieben, indem die Halbleiterschalter 22 geregelt jeweils in dem stromführenden Zweig der jeweiligen Halbbrücke aufgesteuert werden.

Wie vorstehend erwähnt, ist das Energieversorgungssystem 2 derart ausgebildet, dass wahlweise und gegeneinander austauschbar das drei-phasige Versorgungsnetz 26 oder das zwei-phasige Versorgungsnetz 28 an das Schaltwerk 8 anschließbar ist. In FIG 4 ist die versorgungstechnische Verbindung des Energieversorgungssystems 2 mit dem drei-phasigen Versorgungsnetz 26 gezeigt, wie sie bei der Nutzung von sogenannten Strom-Tankstellen üblicherweise gegeben ist. FIG 5 hingegen gibt die Gegebenheiten bei einem Anschluss des Energieversorgungssystems 2 an das zwei-phasige Versorgungsnetz 28 wieder, was der typischen Ladesituation in einem Privathaushalt entspricht.

Wie sich aus dem Vergleich der FIG 4 und 5 entnehmen lässt, erfolgt die Verschaltung im Schaltwerk 8 hierbei unabhängig von der Phasenanzahl des angeschlossen Versorgungsnetzes 26 bzw. 28. Im Falle des 2-phasigen Versorgungsnetzes 28 bleibt jedoch gemäß FIG 5 eine Gruppe von Phasen 18 des Stromwandlers 10 ungenutzt.

Anstelle des exemplarisch in FIG 1 dargestellten sechs-phasigen Spannungswandlers 10 können allgemein Spannungswandler mit einer Anzahl i (mit 1 # 6) von Phasen eingesetzt werden. Um im Lademodus einerseits alle dieser Phasen nutzen zu können, anderseits aber aus Symmetriegründen allen Netzphasen eine gleich große Phasengruppe des Spannungswandlers zuordnen zu können, ist die Anzahl i hierbei vorzugsweise derart gewählt, dass sie einem ganzzahligen Vielfachen n (mit n = 3,4,...) der Zahl Drei, also i = 3*n, entspricht. In diesem Fall sind jeweils n Phasen zu einer Phasengruppe zusammengeschlossen.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

## Patentansprüche

1. Energieversorgungssystem (2) für einen Elektromotor (4) eines Elektrofahrzeugs, mit einem Spannungswandler (10) sowie mit einem Schaltwerk (8), mittels welchem der Spannungswandler (10)
- in einem ersten Betriebsmodus zur Versorgung des Elektromotors (4) mit elektrischer Energie aus einem Akkumulator (6) als Gleichspannungs-Gleichspannungs-Wandler zwischen den Akkumulator (6) und einem dem Elektromotor (4) vorgeschalteten Zwischenkreis (12) schaltbar ist, und
- in einem zweiten Betriebsmodus zur Einspeisung von elektrischer Energie aus einem Versorgungsnetz (26,28) in den Akkumulator (6) als Gleichrichter zwischen das Versorgungsnetz (26,28) und den Akkumulator (6) schaltbar ist.

2. Energieversorgungssystem (2) nach Anspruch 1, wobei der Spannungswandler (10) eine Anzahl von Phasen (18) umfasst, die mindestens der Phasenanzahl des Versorgungsnetzes (26,28) entspricht.

3. Energieversorgungssystem (2) nach Anspruch 2, wobei die Anzahl von Phasen (18) des Spannungswandlers (10) einem ganzzahligen Vielfachen der Phasenanzahl des Versorgungsnetzes (26,28) entspricht.

4. Energieversorgungssystem (2) nach Anspruch 2 oder 3, wobei die Phasen (18) des Spannungswandlers (10) in dem ersten Betriebsmodus durch das Schaltwerk (8) in Parallelschaltung mit dem Pluspol des Akkumulators (6) verschaltet sind.

5. Energieversorgungssystem (2) nach einem der Ansprüche 2 bis 4, wobei jeweils eine Phase (18) oder eine Gruppe von Phasen (18) des Spannungswandlers (10) in dem zweiten Betriebsmodus durch das Schaltwerk (8) mit jeder Phase des Versorgungsnetzes (26,28) verschaltet ist und wobei der Pluspol des Akkumulators (6) durch das Schaltwerk (8) mit dem Pluspol des Zwischenkreises (12) verschaltet ist.

6. Energieversorgungssystem (2) nach einem der Ansprüche 1 bis 5, wobei der Spannungswandler (10) in dem ersten Betriebsmodus als Hochsetzsteller betrieben ist, um aus der von dem Akkumulator (6) ausgegebenen Gleichspannung eine hochgesetzte Gleichspannung mit höherem Spannungswert zu erzeugen.

7. Energieversorgungssystem (2) nach Anspruch 6, wobei der Spannungswandler (10) in dem ersten Betriebsmodus geregelt betrieben ist, um die hochgesetzte Gleichspannung auf einem vorgegebenen Sollwert konstant zu halten.

8. Energieversorgungssystem (2) nach einem der Ansprüche 1 bis 7, wobei das Schaltwerk (8) zum Betrieb in dem zweiten Betriebsmodus wahlweise und austauschbar an ein drei-poliges Versorgungsnetzwerk (26) oder an ein zwei-poliges Versorgungsnetzwerk (28) anschließbar ist.

9. Energieversorgungssystem (2) nach einem der Ansprüche 1 bis 8, mit einem dem Zwischenkreis (12) und dem Elektromotor (4) zwischengeschalteten Wechselrichter (14) zur Speisung des Elektromotors (4) mit einem Wechselstrom.

10. Verfahren zum Betrieb eines Energieversorgungssystems (2) für einen Elektromotor (4) eines Elektrofahrzeugs, wobei das Energieversorgungssystem (2) einen Spannungswandler (10) umfasst, wobei der Spannungswandler (10)
- in einem ersten Betriebsmodus zur Versorgung des Elektromotors (4) mit elektrischer Energie aus einem Akkumulator (6) als Gleichspannungs-Gleichspannungs-Wandler betrieben wird, und
- in einem zweiten Betriebsmodus zur Einspeisung von elektrischer Energie aus einem Versorgungsnetz (26,28) in den Akkumulator (6) als Gleichrichter betrieben wird.
